# EUROPEAN PATENT SPECIFICATION

(11) **EP 2 400 682 B1**
(45) Date of publication and mention of the grant of the patent: **17.04.2013**
(21) Application number: 10166961.2
(22) Date of filing: 23.06.2010
(51) Int. Cl.: H04L 1/00

(54) **Method and device for a checksum modification and identifying a checksum modification**
Verfahren und Vorrichtung zum Verändern eine Prüfsumme und zum Erkennen der veränderten Prüfsumme
Procédé et dispositif pour modifier une somme de vérification et identifier la somme de vérification modifiée

(43) Date of publication of application: 28.12.2011
(73) Proprietor: Robert Bosch GmbH, 70442 Stuttgart (DE)
(72) Inventor: Widmaier, Jochen, 70825, Korntal-Muenchingen (DE); Baus, Michael, 74321, Bietigheim-Bissingen (DE)

(56) References cited:
- GB-A- 2 116 403
- JP-A- 9 162 752
- US-A- 3 836 957

## Description

### Prior art

The present invention relates to a method of checksum modification for signaling a specific error of a plurality of specific errors of an apparatus, a method of identifying a checksum modification as a specific error of a plurality of specific errors of an apparatus, a control device according as well as a computer program product according to the independent claims.

In communication environments where external disturbance, e.g. electromagnetic coupling on the communication channel, is expected, the actual data is expanded by a checksum, e.g. CRC (CRC = Cyclic Redundancy Check). The receiver knows how the sender calculated the checksum and can do the same on the current data to make sure with a high probability that the data was not changed due to external disturbance.

JP 7321809 describes a method of informing an error of frame data to a reception side by adding a minimum quantity of hardware by destroying a CRC code by inverting a bit in the case an error in the frame memory is detected.

JP 09162752 A discloses, that when a data period elapses, at the same time a first switch is open, a search switch is closed and a error flag obtained by an error correction circuit is fed to an adder via the second switch. On the other hand, a cyclic redundancy check code CRCC is given serially to the adder via an adder from a generation polynomial register. When there is no error in data received by the generation polynomial register, since an error flag whose content is '0' is given to one input terminal of the adder, the CRCC is outputted to a post stage without any modification and when any error is in existence, the error flag whose content is "1' is given to the adder, the data whose logic is inverted are outputted serially.

GB 2 116 403 A discloses that data bits such as digital samples of a sound signal can be supplemented by error checking bits, e.g. provided by a Parity Generator, and these error bits are used to carry additional data bits (Extra Data) very securely by using the additional data bits to modify groups of the parity bits by way of a Pattern Generator and Parity Modifier.

### Disclosure of the invention

On this background, the present invention serves to present a method of checksum modification for signaling a specific error of a plurality of specific errors of an apparatus, a method of identifying a checksum modification as a specific error of a plurality of specific errors of an apparatus, furthermore a control device employing these methods as well as finally a respective computer program product according to the independent claims. Advantageous embodiments result from the respective dependent claims and the subsequent description.

The present invention provides a method of checksum modification for signaling a specific error of a plurality of specific errors of an apparatus, comprising: receiving a data frame comprising a data packet and a checksum for the data packet; modifying the checksum according to one of a plurality of error signaling patterns each describing a different specific error; replacing the checksum by the modified checksum; and outputting the data frame comprising the data packet and the modified checksum.

The method proposed herein may be employed for the communication of an error in environments where a data change due to an external disturbance is very unlikely to occur. It may e.g. be employed for the communication of an internal error of an apparatus of a vehicle, wherein the apparatus or a controller thereof may serve as the sender in a communication system for communicating the error. The apparatus may e.g. be a sensor of the vehicle, which is designed to collect data used for further processing in e.g. the vehicle's control device. The checksum may be a CRC (cyclic redundancy check) checksum, e.g. an even parity checksum. The modification may e.g. be effected by altering one or more bits of the checksum from 0 to 1 or vice versa. The signaling may be effected via an appropriate interface between e.g. a sensor controller of a vehicle and the vehicle's central control device. The specific error may be a malfunction of the apparatus that the apparatus itself or a control device of the apparatus has detected. The specific error may be such that data acquired by the respective apparatus is unreliable or faulty and should therefore not be used for further procedures. The receiving of the data frame may be effected via an appropriate interface. The data frame may e.g. contain measurement data of the vehicle's apparatus such as a sensor. Each of the plurality of error signaling patterns may differ from one another and be uniquely ascribable to one of the different specific errors. The checksum may be replaced by the modified checksum according to an appropriate algorithm. The data frame comprising the modified checksum may be output to a transmitting unit of the apparatus' controller via an appropriate interface in order to be transmitted to the control device, where further actions may be initiated depending on the data frame with the modified checksum received.

A lot of communication protocols add CRC checksums to the actual data to detect errors during the transmission.

The present invention is based on the finding that, if those errors are unlikely, the protocol can be expanded to transmit error codes within the CRC checksum. If the data is of no value, the checksum may be intentionally modified to a wrong checksum to signal an error.

One major advantage of the approach presented here is that errors can be signaled even if they happen during the transmission without usage of special error bits or codes which take valuable transmission space (e.g. usage of the last three bits before the checksum to signal errors).

According to an embodiment, in the step of modifying, the checksum may be modified by inverting at least one bit of the checksum. Depending on the modifying algorithm used, it is also possible that all bits or bits at specific positions in the checksum be inverted. Advantageously, the inversion, especially of one bit, is a quick and simple operation.

According to a further embodiment, in the step of modifying, an XOR operation rule may be used. This kind of operation is advantageous in that it is very simple in computing.

Furthermore, in the step of modifying, a first error signaling pattern may be used for signaling a first specific error and a second error signaling pattern may used for signaling a second specific error. Herein, the first and second signaling patterns may differ in each position of the patterns. This provides the benefit that the codes formed by the patterns will differ greatly from one another so that e.g. a very robust differentiation between a mechanical defect and an ASIC error of the apparatus in question is made possible if both errors are identified by individual error codes.

The present invention further provides a method of identifying a checksum modification as a specific error of a plurality of specific errors of an apparatus, comprising: receiving a data frame comprising a data packet and a checksum for the data packet; comparing the received checksum to a checksum determined from the data packet in order to verify whether the received checksum was modified; in the case the received checksum was modified, identifying an error signaling pattern with which the received checksum was modified, the error signaling pattern corresponding to one of a plurality of specific errors; and recognizing the specific error corresponding to the error signaling pattern with which the received checksum was modified.

The above method may e.g. be used for the identification of a checksum modification effected as described above. The method may be employed in a control device of a vehicle in order to acknowledge the signaling of the malfunctioning of the apparatus in question by means of the method discussed above. The control device may serve as the receiver of the communication system for communicating an error as mentioned in context with the method above. Upon the acknowledgement, a decision routine may be started in the control device in order to deactivate the faulty apparatus and inform the vehicle's driver on the malfunction and deactivation. The receiving of the data frame may be effected via an appropriate interface between a controller of the apparatus and the control device. The data frame may be the data frame as discussed above in context with the method of checksum modification. The steps of comparing and determining may be performed using appropriate algorithms. The verification of the checksum having been modified may be made in that the comparison shows that the checksum received differs from the checksum in a certain manner, wherein the certain manner may indicate the error signaling pattern. The specific error may be recognized by comparing the error signaling pattern with e.g. a table of specific errors and corresponding error signaling patterns by an appropriate comparison algorithm.

According to an embodiment, the method may further comprise a step of invalidating the data packet for further usage if, in the step of comparing, it is determined that the received checksum was modified. The invalidation of the data packet may bear the advantage that it may be prevented that erroneous data may lead to a malfunctioning of one of the vehicle's systems such as the safety system.

The method may further comprise a step of modifying a transmission checksum of a transmission frame, which may comprise a transmission packet and a transmission checksum for the transmission packet, according to a specific modification rule, if, in the step of comparing, it was recognized that the received checksum was modified. The method may further comprise a step of outputting the transmission frame, which may comprise the transmission packet and the modified transmission checksum.

The transmission frame may be a data frame to be sent from the receiver to the sender in response to the data frame received from the sender. The modifying of the transmission checksum may be effected in analogy to the above discussed method of checksum modification. The outputting may be effected via an interface between the receiver and the sender. The advantage of this step may be that the receiver may in this way notify the sender of the acknowledgement of the specific error.

The present invention further provides a control device configured to effect or implement the steps of the inventive methods. Especially the control device may comprise means; each means being configured for performing one of the steps of one of the inventive methods. This alternative embodiment of the invention in the form of a control device may also serve to achieve the object underlying the invention in a fast and efficient manner.

At hand, a control device may be an electric device, which processes sensor signals and, in dependence thereon, outputs control signals. The control device may comprise an interface, which may be configured in hardware and/or in software. In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with a program code stored on a machine-readable carrier such as a semiconductor memory, a hard disk or an optical memory and utilized for performing the method according to any one of the aforementioned embodiments, when the program is executed on a control device.

The invention is exemplarily explained in further detail by means of the accompanying drawings, in which:
- Fig. 1: shows a representation of how an external disturbance changes actual data in data transmission;
- Fig. 2: shows a flow chart of a method of checksum modification for signaling a specific error, according to an embodiment of the present invention;
- Fig. 3a: shows a data frame comprising a data packet and a correct check-sum;
- Fig. 3b: shows a data frame comprising a data packet and a modified check-sum, according to an embodiment of the present invention
- Fig. 4: shows a flow chart of a method of identifying a checksum modification as a specific error, according to an embodiment of the present invention;
- Fig. 5: shows in a combined representation a command data frame of a sender and a result data frame of a receiver, according to an embodiment of the present invention; and
- Fig. 6: shows a control device configured to perform the steps of one of the methods of Figs. 2 and 4.

In the figures, like or similar elements may be provided with like or similar reference numbers, with a repeated description being dispensed with. In addition, the figures of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions. Furthermore, inventive method steps may also be executed repeatedly or in an order other than described. If an embodiment includes an "and/or" connection between a first feature and a second feature, this may be interpreted such that the embodiment may, according to one form, comprise both the first feature and a second feature and, according to another form, comprise the first feature only or the second feature only.

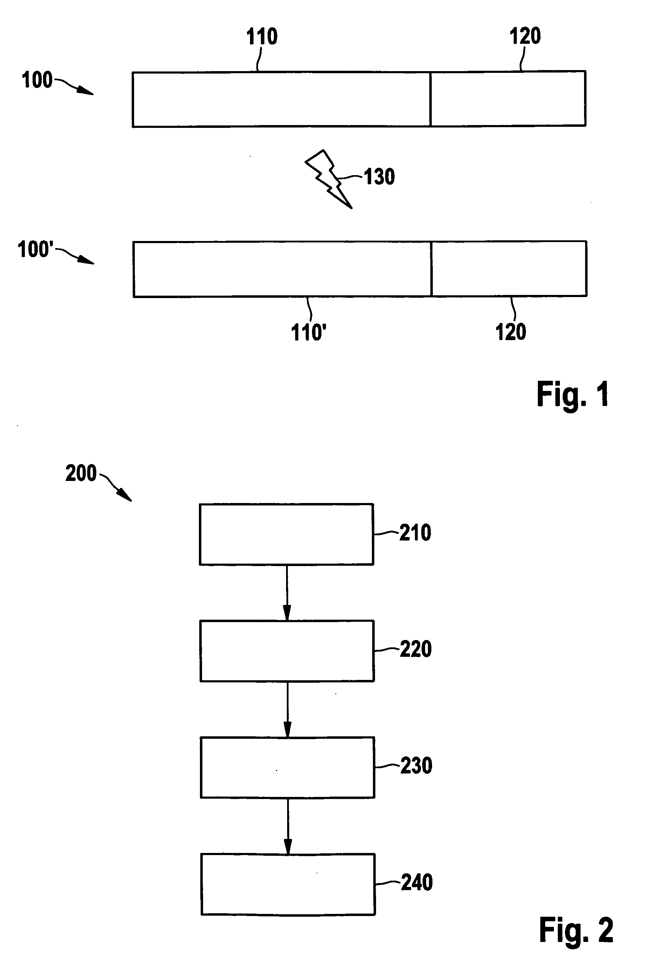

In order to explain the present invention reference is firstly made to a general concept of checksum verification used in data transmissions. Fig. 1 shows a representation of how external disturbance changes actual data in data transmission. A sender sends a data frame 100 comprising actual data 110 and a checksum 120 to a receiver. During transmission, external disturbance 130 changes the actual data 110. The receiver receives a data frame 100' comprising actual data 110' and the checksum 120. The receiver calculates the checksum of the received actual data 110' and detects that it does not match the received checksum 120. Thus, due to the detected mismatch, an error in the transmission is recognized and as a consequence, an error handling procedure is started.

In the following figures, the communication between a sender and a receiver depends on the protocol used. It could either be a master-slave communication with immediate response (in-frame) or response during the next communication (off-frame), or it could be an asynchronous communication, like e.g. Ethernet. The inventive approach can be used in all environments.

Fig. 2 shows a flow chart of a method 200 of checksum modification for signaling a specific error of a plurality of specific errors of an apparatus, according to an embodiment of the present invention. The method 200 may e.g. be executed in an error signaling system comprising a sender sending a data frame and a receiver receiving the data frame. In a first step 210, the sender, which may e.g. be a controller of the apparatus, loads a data frame comprising a data packet and a checksum for the data packet. The checksum may e.g. be a CRC checksum serving as a verification of the data packet. Further, the sender has information about a specific error, e.g. a mechanical defect of the apparatus, i.e. the sender, or an internal ASIC error, such that the data packet should not be used in any further calculations due to possible errors in the data packet. In a second step 220, the sender or a specific unit of the sender modifies the checksum according to one of a plurality of error signaling patterns. Each one of the plurality of error signaling patterns may describe a different specific error and may e.g. be stored in a database, which may be accessed by the sender of the sender's unit according to the present error . In a following step 230, the original checksum is replaced by the checksum modified according to the specific error signaling pattern. And in a step 240, data frame comprising the data packet and the modified checksum is output by the sender via an appropriate interface. Thus, a receiver, which may e.g. be a vehicle's control device, may receive the data frame comprising the data packet and the modified checksum from the sender.

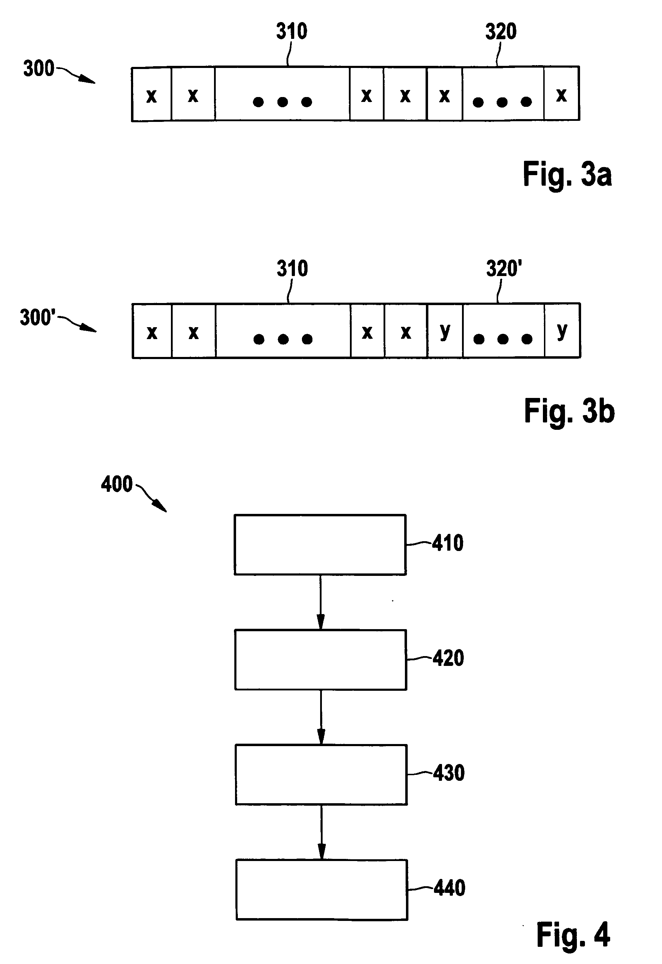

Fig. 3a shows a data frame 300 comprising a data packet 310 and a correct checksum 320. The data packet 310 comprises a number of bits x. The checksum 320 is attached to the data packet 310 and comprises a number of bits x, whereas the checksum 320 mostly comprises a smaller number of bits x than the data packet 310 and represents a predetermined calculation of the bits of the data packet 310. The checksum 320 may e.g. be a CRC checksum. First, the sender prepares the data frame 300 comprising the actual data 310 and the correct checksum 320. The sender knows of some internal error and wants to prevent the receiver to use the data 310. Therefore, the correct checksum 320 is changed by e.g. inverting all or distinct bits. Then the information, i.e. the data frame, is sent out.

Fig. 3b correspondingly shows a data frame 300' comprising the data packet 310 and a changed or modified checksum 320', according to an embodiment of the present invention. The checksum 320' is attached to the data packet 310 and comprises a number of bits y, the y bits e.g. being the inverted x bits of the correct checksum of Fig. 3a. The bits may have been inverted according to an error signaling pattern representing the error the sender knows of. The receiver receives the data frame 300' comprising the actual data 310 and the modified checksum 320'. The receiver calculates the correct checksum out of the actual data 310 and compares it to the received checksum 320'. The result is that they are different, which means that the data 310 cannot be used. Due to the way the checksum 320' is modified, the receiver can determine that it was modified by the sender as it is improbable that the error has occurred during the data transmission.

Fig. 4 shows a flow chart of a method 400 of identifying a checksum modification as a specific error of a plurality of specific errors of an apparatus, according to an embodiment of the present invention. The method 400 may e.g. be executed on a receiver's side of an error signaling system on. In a first step 410, the receiver receives a data frame from the sender, which comprises a data packet and a checksum for the data packet. The received checksum of the data packet needs to be verified as to whether it was modified by the sender in order to signal an error the sender knows of. In order to achieve this, first the receiver determines a checksum from the data packet and then, in a further step 420, compares the determined checksum to the received checksum, e.g. by using an appropriate algorithm. If the comparison shows that the determined checksum differs from the received checksum, a conclusion is made that the received checksum was modified. In a following step 430, the receiver identifies an error signaling pattern with which the received checksum was modified. The identified error signaling pattern may be listed along with other error signaling patterns in a memory unit of the receiver and corresponds to one of a plurality of specific errors each characterized by a specific error signaling pattern. The specific error identified may e.g. be an ASIC error or an internal device error. Finally, in a step 440, the specific error, which is characterized by the error signaling pattern with which the received checksum was modified, is recognized.

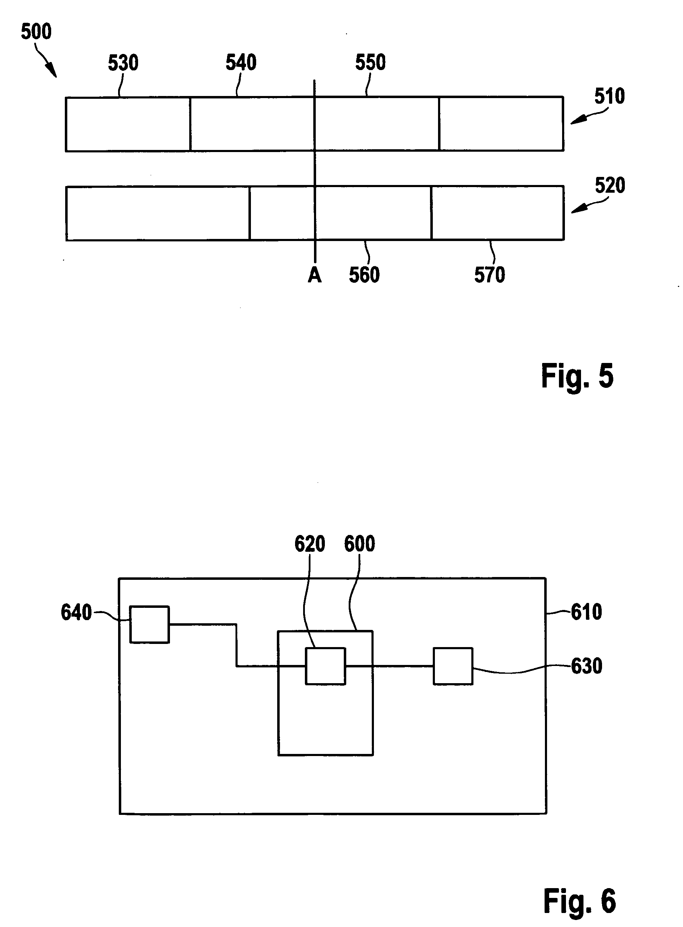

Fig. 5 shows in a combined representation 500 a command data frame 510 of a sender and a transmission or result data frame 520 of a receiver, according to an embodiment of the present invention. The command data frame 510 comprises a command 530, data 540 and a checksum 550. The result data frame 520 comprises a result 560 and a transmission checksum 570. The sender sends the command data frame 510 to the receiver. At a time A, when the receiver has received the data 540 but not yet the checksum 550, the receiver answers and starts sending the result 560 based on the data 540 to the sender. At time A, the receiver detects that the received data 540 does not fit to the command 530, but the sending back of the result 560 has already started. To signal that, for one thing, the command 530 and data 540 do not fit together and, for another thing, the result 560 is worthless, the receiver intentionally modifies the transmission checksum 570 with a predefined procedure. The sender gets direct feedback, that the current command 530 was not successful, if the sender evaluates the checksum 570 from the receiver data frame 520.

Fig. 6 shows a control device 600 configured to perform the steps of the methods of Figs. 2 and/or 4. In Fig. 6, the control device 600 is shown incorporated in a vehicle 610 and comprises a sender 620. Further, a receiver 630 is located at another position in the vehicle 610. In the exemplary illustration shown in Fig. 6, the sender 620 is the controller of one of the vehicle's 610 sensors 640 and is aware of a specific error of the sensor 640 or through the knowledge of an internal error. In order to signal the specific error to the receiver 630, the sender 620 first modifies a checksum of a received data packet to be transmitted to the receiver according to the above method of checksum modification. Then, the sender 620 sends the data packet comprising the modified checksum to the receiver 630 via an appropriate interface. The receiver 630 receives the data packet comprising the modified checksum and recognizes the specific error of the sensor 640 according to the above method of identifying a checksum modification as a specific error.

To sum up, the inventive methods 200, 400 and control device 600 as described in context with Figs. 2 to 6 concern the following inventive aspects. Firstly, the checksum 320 is intentionally modified to a wrong checksum 320', 550 to signal an error. Using this procedure, it is possible to make the transmitted values or data 310, 540 invalid. But it cannot be distinguished, if the checksum 320 was intentionally modified by the sender or if it the data 310, 540 or checksum 320 was modified by disturbance. Secondly, this procedure can be extended if both the sender 620 and the receiver 630 know how the checksum 320 is modified. Then the receiver 630 has a high probability to distinguish, if the checksum 320 was modified intentionally. Now it is possible to distinguish between a transmission disturbance and an error at the sender 620 side. Thirdly, this procedure can be extended if the sender 620 uses different procedures to modify the checksum 320 for different errors. For example, checksum XOR with 0101 b could mean "internal ASIC error"; checksum XOR with 1010b could mean "mechanical defect of sensor"; etc. The receiver 630 can then differentiate the reason with a high probability. Thus, the error signaling patterns 0101 b or 1010b may be binary numbers with which the correct checksum is modified by the application of an XOR-operation of the correct checksum by the respective error signaling pattern.

The methods 200, 400 and control device 600 described herein may be used in environments where real disturbances are quite unlikely or are known not to produce a modified checksum, which signals an error. For example, disturbances will effect three bits at most, whereas each intentional error code will effect five bits. Otherwise there would be the possibility that a disturbance generates a valid error code.

## Claims

1. Method (200) of checksum modification for signaling a specific error of a plurality of specific errors of an apparatus, comprising:
receiving (210) a data frame (300) comprising a data packet (310) and a checksum (320) for the data packet;
modifying (220) the checksum according to one of a plurality of error signaling patterns each describing a different specific error, wherein a first error signaling pattern is used for signaling a first specific error and a second error signaling pattern is used for signaling a second specific error, the first and second signaling patterns differing in each position of the patterns;
replacing (230) the checksum by the modified checksum (320'; 550); and
outputting (240) the data frame comprising the data packet and the modified checksum.

2. Method (200) of claim 1, wherein, in the step of modifying (220), the checksum (320) is modified by inverting at least one bit (x) of the checksum, especially wherein in the step of modifying (220), the checksum is modified by inverting at least two bits of the checksum.

3. Method (200) of claim 2, wherein, in the step of modifying (220), an XOR operation rule is used.

4. Method (400) of identifying a checksum modification as a specific error of a plurality of specific errors of an apparatus, comprising:
receiving (410) a data frame (300'; 510) comprising a data packet (310; 540) and a checksum (320'; 550) for the data packet;
comparing (420) the received checksum to a checksum determined from the data packet in order to verify whether the received checksum was modified;
in the case the received checksum was modified, identifying (430) an error signaling pattern with which the received checksum was modified, the error signaling pattern corresponding to one of a plurality of specific errors; wherein a first error signaling pattern is used for signaling a first specific error and a second error signaling pattern is used for signaling a second specific error, the first and second signaling patterns differing in each position of the patterns;
recognizing (440) the specific error corresponding to the error signaling pattern with which the received checksum was modified; and
invalidating the data packet (310; 540) for further usage if, in the step of comparing, it is determined that the received checksum (320'; 550) was modified.

5. Method (400) of claim 4, further comprising a step of modifying a transmission checksum (570) of a transmission frame (520) comprising a transmission packet (560) and the transmission checksum for the transmission packet according to a specific modification rule if, in the step of comparing, it was recognized that the received checksum (320'; 550) was modified, and further comprising a step of outputting the transmission frame comprising the transmission packet and the modified transmission checksum.

6. Control device (600) configured to perform the steps of a method (100; 400) according to any one of claims 1 to 5.

7. Computer program product with a program code stored on a machine-readable carrier, for performing a method (100; 400) of any one of claims 1 to 5, when the program is executed on a control device.

## Patentansprüche

1. Verfahren (200) der Prüfsummenmodifikation zum Signalisieren eines bestimmten Fehlers von mehreren bestimmten Fehlern einer Vorrichtung, das Folgendes aufweist:
Empfangen (210) eines Datenrahmens (300), der ein Datenpaket (310) und eine Prüfsumme (320) für das Datenpaket aufweist;
Modifizieren (220) der Prüfsumme gemäß einem von mehreren Fehlersignalisierungsmustern, die ein jedes einen unterschiedlichen bestimmten Fehler beschreiben, wobei ein erstes Fehlersignalisierungsmuster zum Signalisieren eines ersten bestimmten Fehlers verwendet wird und ein zweites Fehlersignalisierungsmuster zum Signalisieren eines zweiten bestimmten Fehlers verwendet wird, wobei sich die ersten und zweiten Signalisierungsmuster an jeder Position des Musters unterscheiden;
Ersetzen (230) der Prüfsumme durch die modifizierte Prüfsumme (320'; 550) und
Ausgeben (240) des Datenrahmens, der das Datenpaket und die modifizierte Prüfsumme aufweist.

2. Verfahren (200) nach Anspruch 1, wobei im Schritt des Modifizierens (220) die Prüfsumme (320) durch Invertieren mindestens eines Bits (x) der Prüfsumme modifiziert wird, insbesondere wobei im Schritt des Modifizierens (220) die Prüfsumme durch Invertieren mindestens zweier Bits der Prüfsumme modifiziert wird.

3. Verfahren (200) nach Anspruch 2, wobei im Schritt des Modifizierens (220) eine XOR-Operationsregel verwendet wird.

4. Verfahren (400) des Identifizierens einer Prüfsummenmodifikation als einen bestimmten Fehler von mehreren bestimmten Fehlern einer Vorrichtung, das Folgendes aufweist:
Empfangen (410) eines Datenrahmens (300'; 510), der ein Datenpaket (310, 540) und eine Prüfsumme (320'; 550) für das Datenpaket aufweist;
Vergleichen (420) der empfangenen Prüfsumme mit einer Prüfsumme, die aus dem Datenpaket ermittelt wird, zu dem Zweck, zu prüfen, ob die empfangene Prüfsumme modifiziert wurde;
im Falle, dass die empfangene Prüfsumme modifiziert wurde, Identifizieren (430) eines Fehlersignalisierungsmusters, mit dem die empfangene Prüfsumme modifiziert wurde, wobei das Fehlersignalisierungsmuster einem von mehreren bestimmten Fehlern entspricht; wobei ein erstes Fehlersignalisierungsmuster zum Signalisieren eines ersten bestimmten Fehlers verwendet wird und ein zweites Fehlersignalisierungsmuster zum Signalisieren eines zweiten bestimmten Fehlers verwendet wird, wobei sich die ersten und zweiten Signalisierungsmuster an jeder Position des Musters unterscheiden;
Erkennen (440) des bestimmten Fehlers, der dem Fehlersignalisierungsmuster entspricht, mit dem die empfangene Prüfsumme modifiziert wurde; und
Ungültigmachen des Datenpaketes (310; 540) für weitere Verwendung, falls im Schritt des Vergleichens ermittelt wird, dass die empfangene Prüfsumme (320'; 550) modifiziert wurde.

5. Verfahren (400) nach Anspruch 4, das ferner einen Schritt des Modifizierens einer Übertragungsprüfsumme (570) eines Übertragungsrahmens (520) aufweist, der ein Übertragungspaket (560) und die Übertragungsprüfsumme für das Übertragungspaket gemäß einer bestimmten Modifikationsregel aufweist, falls im Schritt des Vergleichens erkannt wurde, dass die empfangene Prüfsumme (320'; 550) modifiziert wurde, und das ferner einen Schritt des Ausgebens des Übertragungsrahmens aufweist, der das Übertragungspaket und die modifizierte Übertragungsprüfsumme aufweist.

6. Steuergerät (600), das konfiguriert ist, die Schritte eines Verfahrens (100; 400) nach irgendeinem der Ansprüche 1 bis 5 durchzuführen.

7. Computerprogrammprodukt mit einem Programmcode, der auf einem maschinenlesbaren Träger gespeichert ist, zum Durchführen eines Verfahrens (100; 400) nach irgendeinem der Ansprüche 1 bis 5, wenn das Programm auf einem Steuergerät ausgeführt wird.

## Revendications

1. Procédé (200) de modification de somme de contrôle afin de signaler une erreur spécifique parmi plusieurs erreurs spécifiques d'un appareil, consistant à :
- recevoir (210) une trame de données (300) comprenant un paquet de données (310) et une somme de contrôle (320) pour le paquet de données ;
- modifier (220) la somme de contrôle en fonction d'un motif parmi plusieurs motifs de signalisation d'erreur décrivant chacun une erreur spécifique différente, dans lequel un premier motif de signalisation d'erreur est utilisé pour signaler une première erreur spécifique et un second motif de signalisation d'erreur est utilisé pour signaler une seconde erreur spécifique, les premier et second motifs de signalisation différant dans chaque position des motifs ;
- remplacer (230) la somme de contrôle par la somme de contrôle modifiée (320' ; 550) ; et
- émettre (240) la trame de données comprenant le paquet de données et la somme de contrôle modifiée.

2. Procédé (200) selon la revendication 1, dans lequel, lors de l'étape de modification (220), la somme de contrôle (320) est modifiée en inversant au moins un bit (x) de la somme de contrôle, et plus précisément dans lequel, lors de l'étape de modification (220), la somme de contrôle est modifiée en inversant au moins deux bits de la somme de contrôle.

3. Procédé (200) selon la revendication 2, dans lequel, lors de l'étape de modification (220), on utilise une règle d'opération OU exclusif.

4. Procédé (400) d'identification de modification de somme de contrôle comme une erreur spécifique parmi plusieurs erreurs spécifiques d'un appareil, consistant à :
- recevoir (410) une trame de données (300' ; 510) comprenant un paquet de données (310 ; 540) et une somme de contrôle (320' ; 550) pour le paquet de données ;
- comparer (420) la somme de contrôle reçue à une somme de contrôle déterminée à partir du paquet de données afin de vérifier si la somme de contrôle reçue a été modifiée ;
- dans le cas où la somme de contrôle a été modifiée, identifier (430) un motif de signalisation d'erreur par lequel la somme de contrôle reçue a été modifiée, le motif de signalisation d'erreur correspondant à une erreur parmi plusieurs erreurs spécifiques, dans lequel un premier motif de signalisation d'erreur est utilisé pour signaler une première erreur spécifique et un second motif de signalisation d'erreur est utilisé pour signaler une seconde erreur spécifique, les premier et second motifs de signalisation différant dans chaque position des motifs ;
- reconnaître (440) l'erreur spécifique correspondant au motif de signalisation d'erreur par lequel la somme de contrôle reçue a été modifiée ; et
- invalider le paquet de données (310 ; 540) pour tout autre utilisation si, lors de l'étape de comparaison, il est établi que la somme de contrôle (320' ; 550) a été modifiée.

5. Procédé (400) selon la revendication 4, comprenant en outre une étape consistant à modifier un somme de contrôle de transmission (570) d'une trame de transmission (520) comprenant un paquet de transmission (560) et la somme de contrôle pour le paquet de transmission en fonction d'une règle de modification spécifique si, lors de l'étape de comparaison, il a été reconnu que la somme de contrôle reçue (320' ; 550) a été modifiée, et comprenant en outre une étape consistant à émettre la trame de transmission comprenant le paquet de transmission et la somme de contrôle de transmission modifiée.

6. Dispositif de commande (600) conçu pour effectuer les étapes d'un procédé (100 ; 400) selon l'une quelconque des revendications 1 à 5.

7. Produit de type programme informatique comprenant un code de programme stocké sur un support lisible par une machine, afin de réaliser un procédé (100 ; 400) selon l'une quelconque des revendications 1 à 5, lequel programme est exécuté sur un dispositif de commande.
